(19) Europäisches Patentamt
European Patent Office
Office européen des brevets

(11) Veröffentlichungsnummer: **0 314 004 B1**

# (12) EUROPÄISCHE PATENTSCHRIFT

(45) Veröffentlichungstag der Patentschrift: **13.05.92**

(51) Int. Cl.⁵: **C08F 283/08**, //(C08F283/08, 220:04)

(21) Anmeldenummer: **88117539.2**

(22) Anmeldetag: **21.10.88**

## (54) Pfropfpolymerisate von Polyphenylenethern.

(30) Priorität: **30.10.87 DE 3736851**

(43) Veröffentlichungstag der Anmeldung: **03.05.89 Patentblatt 89/18**

(45) Bekanntmachung des Hinweises auf die Patenterteilung: **13.05.92 Patentblatt 92/20**

(84) Benannte Vertragsstaaten: **BE DE FR GB NL**

(56) Entgegenhaltungen: **EP-A- 0 025 200**

(73) Patentinhaber: **BASF Aktiengesellschaft**
**Carl-Bosch-Strasse 38**
**W-6700 Ludwigshafen(DE)**

(72) Erfinder: **Taubitz, Christof, Dr.**
**In der Dreispitz 15**
**W-6706 Wachenheim(DE)**
Erfinder: **Schlemmer, Lothar**
**Duisbergstrasse 1 a**
**W-6701 Maxdorf(DE)**
Erfinder: **Brandt, Hermann, Dr.**
**Keltenstrasse 30**
**W-6707 Schifferstadt(DE)**

EP 0 314 004 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Pfropfpolymerisate aus

A) einem Basispolymeren in Form eines Gemisches aus 50 bis 96 Gew.% Polyphenylenether und 4 bis 50 Gew.%, jeweils bezogen auf das Basispolymere, eines vinylaromatischen Polymeren,

B) einem Salz aus mindestens einem $\alpha,\beta$-ungesättigten Carboxylat und einem mindestens zweiwertigen Kation mit der Maßgabe, daß an die C-Atome der Doppelbindung des Carboxylates nur eine Carboxylgruppe gebunden sein darf, und

C) gegebenenfalls mindestens einem weiteren olefinisch ungesättigten Monomeren aus der Gruppe Acrylsäure, Methacrylsäure, von $C_1$- bis $C_8$-Alkoholen abgeleitete Acrylate oder Methacrylate und Maleinsäureanhydrid.

Weiterhin betrifft die Erfindung die Herstellung dieser Pfropfpolymerisate und deren Verwendung als Formteile oder zur Herstellung von Beschichtungen.

Die Modifizierung von Polyphenylenethern durch Pfropfung mit olefinisch ungesättigten Verbindungen zur Verbesserung der anwendungstechnischen Eigenschaften ist bereits bekannt. So können nach üblichen Methoden z.B. Styrol (vgl. z.B. US-Patente 3 862 263, 4 132 684 oder 4 148 843), Vinylpyridin (vgl. US-Patent 4 278 777), Methylmethacrylat (vgl. EP-A-54 140), ungesättigte Carbonsäuren (vgl. EP-A-25 200) oder eine Mischung aus Styrol und Acrylnitril (vgl. EP-A-83 098 und 59 482, US-Patente 3 522 326 und 4 486 568 sowie DE-A-3 100 534) auf Polyphenylenether pfropfpolymerisiert werden. Eine Mischung von Styrol und Maleinsäureanhydrid (EP-A-17 939 oder JP-B-77/19864) wurde auf Polyphenylenether aufgepfropft, um u.a. die Haftfähigkeit auf anorganischen Materialien zu erhöhen. Im allgemeinen arbeitet man in Gegenwart eines organischen Peroxids als Radikalstarter entweder in Lösung, wäßriger Dispersion oder in einem Schmelzextruder.

Aus der JP-A-50/139 841 waren mit $CO_2H$-gruppenhaltigen Styrolseitenketten gepfropfte Polyphenylenether bekannt, wobei die Carboxylgruppen der Seitenketten teilweise mit mono- oder divalenten Metallen neutralisiert sind.

Diese bekannten Polyphenylenetherpfropfpolymerisate weisen aber noch einige Nachteile bezüglich ihrer mechanischen Eigenschaften auf, insbesondere ist die Reißfestigkeit verbesserungsbedürftig. Manche sind darüber hinaus nur in komplizierten, zum Teil mehrstufigen Verfahren herstellbar.

In der EP-A 254 048 wurde vorgeschlagen, Polyphenylenether mit Maleinsäurehalbestern umzusetzen (Stand der Technik nach Art 54(3), EPÜ).

Aufgabe der vorliegenden Erfindung war es, Pfropfpolymerisate von Polyphenylenethern aufzufinden, die den genannten Mängeln abhelfen.

Demgemäß wurden die eingangs definierten Pfropfpolymerisate gefunden.

Weiterhin wurden Verfahren zur Herstellung dieser Pfropfpolymerisate sowie deren Verwendung als Formteile oder zur Herstellung von Beschichtungen gefunden.

Die Pfropfpolymere sind aufgebaut aus bevorzugt 80 bis 99,9, insbesondere 96 bis 99,7 Gew.-Teilen A, bevorzugt 0,1 bis 20, insbesondere 0,3 bis 4 Gew.-Teilen B und bevorzugt 0 bis 10 Gew.-Teilen C, jeweils bezogen auf 100 Gew.-Teile der Summe aus A, B und C. Besonders bevorzugt wird C nur bis zur halben Gewichtsmenge von B eingesetzt, insbesondere fehlt C.

Als Basispolymere A eignen sich bekannte Polyphenylenether in Form eines Gemisches mit vinylaromatischen Polymeren. Das Basispolymer besteht daher aus 50 bis 96, bevorzugt 90 bis 96 Gew.% Polyphenylenether und 4 bis 50, bevorzugt 4 bis 10 Gew.% des vinylaromatischen Polymeren.

Die eingesetzten Polyphenylenether weisen im allgemeinen ein Molekulargewicht im Bereich von 10.000 bis 80.000, vorzugsweise von 15.000 bis 60.000, bestimmt nach dem in "Macromolecular Synthesis" 1 (1977), S. 83, angegebenen Verfahren auf.

Die Polyphenylenether können beispielsweise durch oxidative Kupplung aus in o-Position disubstituierten Phenolen hergestellt werden. Vorzugsweise werden solche Polyphenylether eingesetzt, die mit vinylaromatischen Polymeren verträglich, d.h. ganz oder weitgehend in diesen Polymeren löslich sind (vgl. A. Noshay, Block Copolymers, S. 8 bis 10, Academic Press, 1977 und O. Olabisi, Polymer-Polymer Miscibility, 1979, S. 117 bis 189).

Nur beispielsweise seien hier einige Polyphenylenether aufgeführt, wie sie u.a. in O. Olabisi, l.c., S. 224 bis 230 und 245 genannt werden wie Poly(2,6-diethyl-1,4-phenylen)oxid, Poly(2-methyl-6-ethyl-1,4-phenylen)oxid, Poly(2-methyl-6-propyl-1,4-phenylen)oxid, Poly-(2,6-dipropyl-1,4-phenylen)oxid, Poly(2-ethyl-6-propyl-1,4-phenylen)oxid, bevorzugt Poly(2,6-dimethyl-1,4-phenylen)oxid oder Copolymere, wie solche, die 2,3,6-Trimethylphenol enthalten, außerdem Polymermischungen. Besonders bevorzugt ist jedoch Poly(2,6-dimethyl-1,4-phenylen)oxid.

Das vinylaromatische Polymerisat ist an sich bekannt. Es ist vorzugsweise mit dem eingesetzten Polyphenylenether verträglich.

Das Molekulargewicht (Gewichtsmittelwert) dieser Polymeren liegt im allgemeinen im Bereich von 1500 bis 2.000.000, vorzugsweise im Bereich von 70.000 bis 1.000.000.

Beispiele für bevorzugte, mit Polyphenylenethern verträgliche vinylaromatische Polymere sind der bereits erwähnten Monographie von Olabisi, S. 224 bis 230 und 245 zu entnehmen. Nur stellvertretend seien hier vinylaromatische Polymere aus Styrol, Chlorstyrol, α-Methylstyrol, p-Methylstyrol genannt; in untergeordneten Anteilen (vorzugsweise nicht mehr als 20, insbesondere nicht mehr als 8 Gew.%), können auch Comonomere wie (Meth)acrylnitril oder (Meth)acrylsäureester am Aufbau beteiligt sein. Ein besonders bevorzugtes vinylaromatisches Polymeres ist Polystyrol. Es versteht sich, daß auch Mischungen dieser Polymere eingesetzt werden können.

Verfahren zur Herstellung solcher vinylaromatischer Polymerer sind an sich bekannt und in der Literatur beschrieben, so daß sich hier nähere Angaben erübrigen. Nur beispielsweise seien hier als geeignete Polymerisationsverfahren die Masse-, Suspensions-, Emulsions- oder Lösungspolymerisation erwähnt.

Die Komponente B ist ein Salz aus mindestens einem α,β-ungesättigten Carboxylat und einem mindestens zweiwertigen Kation, mit der Maßgabe, daß an die C-Atome der Doppelbindung des Carboxylates nur eine Carboxylgruppe gebunden sein darf.

Als α,β-ungesättigte Carboxylate kommen Verbindungen der allgemeinen Formel I

$$CH_2 = CR^1COO^{\ominus} \qquad I,$$

wobei $R^1$ Wasserstoff oder ein $C_1$-$C_4$-Alkylrest sein kann, in Betracht, beispielsweise das Acrylat- oder das Methacrylatanion.

Die Salze dieser Verbindungen mit einem Kation eines Metalls der zweiten Haupt- oder Nebengruppe des Periodensystems der Elemente, wobei gegebenenfalls auch zwei verschiedene Carboxylate an ein Kation gebunden sein können, werden mit Vorteil eingesetzt. Insbesondere werden als Kationen $Mg^{\oplus\oplus}$, $Ca^{\oplus\oplus}$, $Sr^{\oplus\oplus}$, $Ba^{\oplus\oplus}$ und speziell $Zn^{\oplus\oplus}$ verwendet.

Ferner können auch Salze erfindungsgemäß eingesetzt werden, die aus einem bzw. mehreren der genannten Carboxylate und zweiwertigen Kationen von Diaminen oder zwei- oder mehrwertigen Kationen von Triaminen oder Polyaminen bestehen. Als Kationen von Diaminen können Verbindungen der allgemeinen Formel II

$$R^2R^{2'}-\overset{\oplus}{N}H-R^3-\overset{\oplus}{N}H-R^4R^{4'} \qquad II$$

verwendet werden, in denen $R^2$, $R^{2'}$, $R^4$ und $R^{4'}$ unabhängig voneinander Wasserstoff, eine Alkyl-, Cycloalkyl-, Aryl-, Aralkyl- oder Alkylarylgruppe mit bis zu 12 C-Atomen sind und $R^3$ ein $C_2$-$C_4$-Alkylenrest, d.h. ein Di-, Tri- oder Tetramethylenrest ist. Als Kationen von Tri- oder Polyaminen kommen Verbindungen der allgemeinen Formel III

$$H_3\overset{\oplus}{N}-\left[R^5-\overset{\oplus}{N}H_2\right]_n-H \qquad III$$

in Betracht, wobei $R^5$ eine $C_2$-$C_4$-Alkylengruppe, bevorzugt eine Dimethylengruppe, und n eine ganze Zahl von 2 bis 10, bevorzugt 2, darstellen.

Einzelne, von Aminen abgeleitete Kationen, sind

$\overset{\oplus}{N}H_3CH_2CH_2\overset{\oplus}{N}H_3$, $\overset{\oplus}{N}H_3CH_2CH_2CH_2\overset{\oplus}{N}H_3$, $CH_3\overset{\oplus}{N}H_2CH_2CH_2\overset{\oplus}{N}H_2C_2H_5$,

$(CH_3)_2\overset{\oplus}{N}HCH_2CH_2CH_2\overset{\oplus}{N}H(CH_3)_2$, $H_3\overset{\oplus}{N}CH_2CH_2NHCH_2CH_2-\overset{\oplus}{N}H_3$,

$H_3\overset{\oplus}{N}CH_2CH_2\overset{\oplus}{N}H_2CH_2CH_2\overset{\oplus}{N}H_3$, 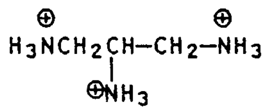 oder

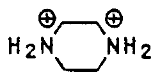 .

Als Komponente B werden Zinkdiacrylat und Zinkdimethacrylat besonders bevorzugt.

Als Monomere mit olefinisch ungesättigten Doppelbindungen C werden Acrylsäure, Methacrylsäure, Acrylnitril, Acrylate oder Methacrylate, die von $C_1$-bis $C_8$-Alkoholen abgeleitet sind, Maleinsäureanhydrid oder deren Gemische verwendet.

Die erfindungsgemäßen Polymerisate können in bekannter Weise durch Zusätze modifiziert werden.

Als Zusatzstoffe seien genannt Hitze- und Lichtstabilisatoren, Gleit-und Entformungsmittel und Färbemittel wie Farbstoffe und Pigmente in üblichen Mengen. Weitere Zusatzstoffe sind Verstärkungsmittel wie Glasfasern, Asbestfasern, Kohlenstoff-Fasern, aromatische Polyamidfasern und/oder Füllstoffe wie Gipsfasern, synthetische Calciumsilikate, Kaolin, calciniertes Kaolin, Wollastonit, Talkum, Kreide, ferner Flammschutzmittel wie Phosphorverbindungen, z.B. Phosphat, Phosphorsäureester, Phosphorigsäureester, Phosphinsäureester, Phosphonigsäureester oder organische Phosphinoxide.

Auch niedermolekulare oder hochmolekulare Polymere kommen als Zusatzstoffe in Betracht, wobei es sich von selbst versteht, daß andere als in A eingesetzte Polymere verwendet werden. Beispiele sind Polycarbonate, mit Butadien- oder Acrylatkautschuk modifizierte Styrol-Acrylnitril-Polymerisate, schlagzähmodifiziertes Polystyrol (HIPS) und Synthesekautschuke wie gepfropfte oder ungepfropfte Polybutadien-, Acrylat-, Styrol-Butadien-, Polybuten-Kautschuke, hydrierte Styrol-Butadien-, Acrylnitril-Butadien-, Ethylen-Propylen- und Polyisopren-Kautschuke oder auch thermoplastische Ethylen-Propylen-Kautschuke, thermoplastische Polyester-Elastomere, Ethylenkautschuke und Ionomere, Styrol-Butadien-Blockcopolymere einschließlich AB-, ABA-, ABA-verschmiert (taper)-, ABAB-, ABAB-verschmierte Stern-Block-Copolymere und ähnliche, analoge Isopren-Blockpolymerisate und (teil)hydrierte Blockcopolymere.

Zur Herstellung der Pfropfpolymerisate werden die Komponenten A und B sowie gegebenenfalls C bei 240 bis 380 °C, vorzugsweise 265 bis 295 °C, also in der Schmelze, miteinander umgesetzt. Hierzu eignen sich besonders Extruder, da in diesen im allgemeinen auch eine gute Durchmischung der Komponenten erzielt wird. Besonders gut für das erfindungsgemäße Verfahren eignet sich ein Zweischneckenextruder, der mit Knetelementen, zum Teil mit rückwärtsförderndem Gewinde, ausgerüstet sein kann. Die Komponenten werden im allgemeinen gemeinsam dosiert und in einer Aufschmelzzone des Extruders aufgeschmolzen. An diese Zone schließt sich üblicherweise die Reaktionszone an. Vor dem Produktaustrag befindet sich im allgemeinen eine Entgasungszone zur Entfernung der flüchtigen Bestandteile. Die Verweilzeit im Extruder beträgt im allgemeinen 0,5 bis 10 Minuten, bevorzugt 1 bis 5 Minuten. Die ausgetragene Schmelze wird üblicherweise granuliert.

Bei der Reaktion kann ein Radikalstarter, der bevorzugt ein organisches Peroxid oder eine Azoverbindung ist, zugegen sein. Solche Radikalstarter sind dem Fachmann bekannt. Allgemein werden organische Peroxide mit einer Halbwertszeit des Zerfalls (vgl. Modern Plastics 36, 1959, Heft 2, Seiten 142 bis 148) bei 200 °C von 0,1 bis 300 Sekunden verwendet. Die Wahl des Radikalstarters richtet sich nach der gewünschten Reaktionstemperatur. Beispielhaft seien genannt: Di-cumyl-peroxid, Di-tert.-butylperoxid und Azo-bis-isobutyronitril.

Die Radikalstarter können in Mengen unter 10 Gew.%, bevorzugt unter 5 Gew.%, bezogen auf die eingesetzten Reaktionskomponenten, anwesend sein. Man erhält besonders gute Produkte, wenn man, insbesondere bei Temperaturen über 265 °C, ohne Zusatz, also in Abwesenheit oder praktischer Abwesenheit eines Radikalstarters arbeitet.

Die erfindungsgemäßen Pfropfpolymerisate sind in einfacher und rationeller Weise herstellbar und weisen eine überraschend hohe Reißfestigkeit, gekoppelt mit weiteren guten mechanischen Eigenschaften wie verbesserte Reißdehnung, Streckspannung oder Elastizität auf, was ihre Gebrauchseigenschaften deutlich erhöht. Sie können ohne Schwierigkeit durch thermoplastische Verformungsverfahren wie Spritzguß oder Extrusion verarbeitet und als Formteile oder zur Beschichtung von Oberflächen eingesetzt werden.

Beispiel 1

95,5 kg Poly-(2,6-dimethyl-1,4-phenylen)ether (PPE) mit einer relativen Viskosität von 0,50 (gemessen in 1 gew.%iger Lösung in $CHCl_3$ bei 25 ° C), 3 kg Polystyrol (PS 144 C (BASF AG), Schmelzflußindex (MFI) bei 200 ° C/5 kg Belastung = 24 g/10 min) und 1,5 kg Zinkdiacrylat wurden in einen Zweischneckenextruder (ZSK 53; Werner & Pfleiderer) dosiert, in einem ersten Teil unter Verwendung von Knetelementen bei 280 ° C aufgeschmolzen, in einem zweiten Teil unter Kneten und Verwendung von Knetelementen bei 280 ° C umgesetzt und anschließend in einer Entgasungszone bei 280 ° C durch Anlegen von Vakuum entgast. Die mittlere Verweilzeit im Extruder betrug 4 min. Die austretende Schmelze wurde durch ein Wasserbad geleitet, granuliert und getrocknet.

Die Testergebnisse sind zusammen mit denen der folgenden Beispiele und Vergleichsversuche in der Tabelle gezeigt.

Beispiel 2

95,5 kg PPE, 3 kg Polystyrol (beide wie in Beispiel 1), 1,0 kg Zinkdiacrylat und 0,5 kg Acrylsäure wurden wie in Beispiel 1 umgesetzt. Die Verweilzeit im Extruder betrug 3 Minuten.

Beispiel 3

96,3 kg PPE, 3 kg Polystyrol (beide wie in Beispiel 1) und 0,7 kg Zinkdimethacrylat wurden wie bei Beispiel 1 umgesetzt. Die Verweilzeit betrug 3 Minuten.

Vergleichsversuch 1*

95,5 kg PPE, 3 kg Polystyrol (beide wie in Beispiel 1) und 1,5 kg Acrylsäure wurden wie bei Beispiel 1 umgesetzt.

Vergleichsversuch 2*

95,5 kg PPE, 3 kg Polystyrol (beide wie in Beispiel 1) und 1,5 kg Natrium-acrylat wurden wie bei Beispiel 1 umgesetzt.

Vergleichsversuch 3*

95,5 kg PPE, 3 kg Polystyrol (beide wie in Beispiel 1) und 1,5 kg 2-Ethylhexylmonomaleinat wurden gemäß Beispiel 1 umgesetzt.

Vergleichsversuch 4*

Gemäß der JP-A 50/139841 wurde eine Mischung aus 10 Gew.-Teilen Ethylbenzol, 1,0 Gew.-Teilen PPE (wie in Beispiel 1), 0,2 Gew.-Teilen Acrylsäure, 0,2 Gew.-Teilen Styrol und 0,04 Gew.-Teilen di-tert.-Butylperoxid 2,5 Stunden bei 140 ° C polymerisiert. 100 Gew.-Teile des Pfropfpolymeren wurden mit einer Mischung aus 400 Gew.-Teilen Wasser, 200 Gew.-Teilen Ethanol und 10 Gew.-Teilen NaOH 3 Stunden bei 70 ° C behandelt. Anschließend wurde das Polymere getrocknet. 95 Gew.-Teile des Polymeren wurden mit 5 Gew.-Teilen des in Beispiel 1 verwendeten Polystyrols abgemischt.

An spritzgegossenen Pfrüfkörpern wurden die Reißfestigkeit nach DIN 53 455, die Streckspannung nach DIN 53 455, die Reißdehnung nach DIN 43 455 und der Elastizitätsmodul nach DIN 53 457 bestimmt.

Tabelle

| Beispiel | Reißfestigkeit [N/mm²] | Streckspannung [N/mm²] | Reißdehnung [%] | Elastizitätsmodul [N/mm²] |
|---|---|---|---|---|
| 1 | 68,5 | 85,3 | 15,6 | 2900 |
| 2 | 69,7 | 82,3 | 12,5 | 2950 |
| 3 | 71,2 | 81,3 | 15,1 | 2900 |
| Vergleichsversuch | | | | |
| 1* | 53,5 | 71,1 | 10,1 | 2850 |
| 2* | 59,1 | 72,4 | 10,1 | 2900 |
| 3* | 56,1 | 68,0 | 11,0 | 2900 |
| 4* | 50,0 | 52,0 | 4,0 | 2750 |

**Patentansprüche**

**1.** Pfropfpolymerisate aus
A) einem Basispolymeren in Form eines Gemisches aus 50 bis 96 Gew.% Polyphenylenether und 4 bis 50 Gew.%, jeweils bezogen auf das Basispolymere, eines vinylaromatischen Polymeren,
B) einem Salz aus mindestens einem $\alpha,\beta$-ungesättigten Carboxylat und einem mindestens zweiwertigen Kation mit der Maßgabe, daß an die C-Atome der Doppelbindung des Carboxylates nur eine Carboxylgruppe gebunden sein darf, und
C) gegebenenfalls mindestens einem weiteren olefinisch ungesättigten Monomeren aus der Gruppe Acrylsäure, Methacrylsäure, von $C_1$- bis $C_8$-Alkoholen abgeleitete Acrylate oder Methacrylate und Maleinsäureanhydrid.

**2.** Pfropfpolymerisate nach Anspruch 1 aus 80 bis 99,9 Gew.-Teilen A, 0,1 bis 20 Gew.-Teilen B und 0 bis 10 Gew.-Teilen C, jeweils bezogen auf 100 Gew.-Teile der Summe aus A, B und C.

**3.** Pfropfpolymerisate nach Anspruch 1 aus 96 bis 99,7 Gew.-Teilen A und 0,3 bis 4 Gew.-Teilen B, jeweils bezogen auf 100 Gew.-Teile der Summe aus A, B und C.

**4.** Pfropfpolymerisate nach den Ansprüchen 1 bis 3, wobei B ein Salz von Carboxylaten der allgemeinen Formel I

$$CH_2 = CR^1COO^{\ominus} \quad I,$$

wobei $R^1$ Wasserstoff oder ein $C_1$-$C_4$-Alkylrest ist, mit einem mindestens zweiwertigen Kation eines Metalls der zweiten Haupt- oder Nebengruppe des Periodensystems, eines Diamins, Triamins oder Polyamins.

**5.** Pfropfpolymerisate nach den Ansprüchen 1 bis 4, wobei man das Kation auswählt aus der Gruppe $Mg^{\oplus\oplus}$, $Ca^{\oplus\oplus}$, $Sr^{\oplus\oplus}$, $Ba^{\oplus\oplus}$ und $Zn^{\oplus\oplus}$.

**6.** Pfropfpolymerisate nach den Ansprüchen 1 bis 5, wobei das Kation $Zn^{\oplus\oplus}$ ist.

**7.** Pfropfpolymerisate nach den Ansprüchen 1 bis 6, wobei B Zinkdiacrylat oder Zinkdimethacrylat ist.

**8.** Verfahren zur Herstellung von Pfropfpolymerisaten gemäß den Ansprüchen 1 bis 7, wobei man die Komponenten A und B sowie gegebenenfalls C bei 240 bis 380 °C in der Schmelze bei einer Verweilzeit von 0,5 bis 10 Minuten umsetzt.

**9.** Verfahren nach Anspruch 8, dadurch gekennzeichnet, daß man die Umsetzung in Abwesenheit oder praktischer Abwesenheit eines Radikalstarters vornimmt.

**10.** Verwendung der Pfropfpolymerisate gemäß den Ansprüchen 1 bis 9 als Formteile oder zur Herstellung von Beschichtungen.

**Claims**

**1.** A graft polymer of

A) a base polymer in the form of a mixture of from 50 to 96% by weight of polyphenylene ether and from 4 to 50% by weight, based in each case on the base polymer, of a vinylaromatic polymer,

B) a salt of one or more $\alpha,\beta$-unsaturated carboxylates and a divalent or polyvalent cation, with the proviso that only one carboxyl group may be bonded to the carbon atoms of the double bond of the carboxylate, and

C) if required, one or more further olefinically unsaturated monomers selected from the group consisting of acrylic acid, methacrylic acid, acrylates or methacrylates derived from $C_1$-$C_8$-alcohols and maleic anhydride.

**2.** A graft polymer as claimed in claim 1, consisting of from 80 to 99.9 parts by weight of A, from 0.1 to 20 parts by weight of B and from 0 to 10 parts by weight of C, based in each case on 100 parts by weight of the sum of A, B and C.

**3.** A graft polymer as claimed in claim 1, consisting of from 96 to 99.7 parts by weight of A and from 0.3 to 4 parts by weight of B, based in each case on 100 parts by weight of the sum of A, B and C.

**4.** A graft polymer as claimed in claim 1 or 2 or 3, wherein B is a salt of a carboxylate of the general formula I

$$CH_2 = CR^1COO^- \qquad I$$

where $R^1$ is hydrogen or $C_1$-$C_4$-alkyl, with a divalent or polyvalent cation of a metal of the second main group or subgroup of the Periodic Table or of a diamine, triamine or polyamine.

**5.** A graft polymer as claimed in claim 1 or 2 or 3 or 4, wherein the cation is selected from the group consisting of $Mg^{++}$, $Ca^{++}$, $Sr^{++}$, $Ba^{++}$ and $Zn^{++}$.

**6.** A graft polymer as claimed in claim 1 or 2 or 3 or 4 or 5, wherein the cation is $Zn^{++}$.

**7.** A graft polymer as claimed in claim 1 or 2 or 3 or 4 or 5 or 6, wherein B is zinc diacrylate or zinc dimethacrylate.

**8.** A process for the preparation of a graft polymer as claimed in claim 1 or 2 or 3 or 4 or 5 or 6 or 7, wherein components A and B and, if required, C are reacted at from 240 to 380 °C in the melt during a residence time of from 0.5 to 10 minutes.

**9.** A process as claimed in claim 8, wherein the reaction is carried out in the absence or virtual absence of a free radical initiator.

**10.** Use of the graft polymer as claimed in claim 1 or 2 or 3 or 4 or 5 or 6 or 7 or 8 or 9 as a shaped article or for the production of coatings.

## Revendications

**1.** Polymères greffés, composés

A) d'un polymère de base sous forme d'un mélange de 50 à 96% en poids de polyoxyphénylène et de 4 à 50% en poids, chaque fois par rapport au polymère de base, d'un polymère vinylaromatique,

B) d'un sel d'au moins un ion carboxylate $\alpha,\beta$-insaturé et d'un cation au moins bivalent, étant spécifie qu'il ne peut être fixé qu'un groupement carboxyle sur les atomes de carbone de la double liaison du carboxylate, et

C) éventuellement d'au moins un autre monomère à insaturation oléfinique du groupe de l'acide acrylique, de l'acide méthacrylique, des acrylates ou des méthacrylates dérives d'alcools en $C_1$ à $C_8$, et de l'anhydride maléique.

**2.** Polymères greffés selon la revendication 1, composés de 80 à 99,9 parties en poids de A, de 0,1 à 20 parties en poids de B et de 0 à 10 parties en poids de C, chaque fois par rapport à 100 parties en poids de la somme de A, B et C.

**3.** Polymères greffés selon la revendication 1, composés de 96 à 99,7 parties en poids de A et de 0,3 à 4 parties en poids de B, chaque fois par rapport à 100 parties en poids de la somme de A, B et C.

**4.** Polymères greffés selon l'une quelconque des revendications 1 à 3, dans lesquels B est un sel d'ions carboxylates de formule générale I

$$CH_2 = CR^1COO^{\ominus} \qquad I$$

dans laquelle $R^1$ est un atome d'hydrogène ou un reste alkyle en $C_1$-$C_4$, avec un cation au moins bivalent d'un métal des groupes IIa et IIb de la classification périodique, d'une diamine, d'une triamine ou d'une polyamine.

**5.** Polymères greffés selon l'une quelconque des revendications 1 à 4, dans lesquels on choisit le cation dans le groupe $Mg^{\oplus\oplus}$, $Ca^{\oplus\oplus}$, $Sr^{\oplus\oplus}$, $Ba^{\oplus\oplus}$ et $Zn^{\oplus\oplus}$.

**6.** Polymères greffés selon l'une quelconque des revendications 1 à 5, dans lesquels le cation est $Zn^{\oplus\oplus}$

**7.** Polymères greffés selon l'une quelconque des revendications 1 à 6, dans lesquels B est du diacrylate de zinc ou du diméthacrylate de zinc.

**8.** Procédé de préparation de polymères greffés selon l'une quelconque des revendications 1 à 7, dans lequel on fait réagir les composants A, B et éventuellement C à une température de 240 à 380 ° C dans la masse fondue, avec une durée de séjour de 0,5 à 10 mn.

**9.** Procédé selon la revendication 8, caractérisé en ce qu'on procède à la réaction en l'absence ou pratiquement en l'absence d'un initiateur radicalaire.

**10.** Utilisation des polymères greffés selon l'une quelconque des revendications 1 à 9 comme pièces moulées ou pour la formation d'enduits.